# EUROPEAN PATENT SPECIFICATION

(11) **EP 4 201 233 B1**
(45) Date of publication and mention of the grant of the patent: **03.12.2025**
(21) Application number: 22812403.8
(22) Date of filing: 28.10.2022
(51) Int. Cl.: A24F 13/06, B01D 46/52, A24F 13/14, A24F 13/00

(54) **SIDESTREAM SMOKE REMOVAL DEVICE COMPRISING HEPA FILTER**
SEITENSTROMRAUCHENTFERNUNGSVORRICHTUNG MIT HEPA-FILTER
DISPOSITIF D'ÉLIMINATION DE FUMÉE SECONDAIRE COMPRENANT UN FILTRE HEPA

(30) Priority: 02.11.2021 KR 20210148382
(43) Date of publication of application: 28.06.2023
(73) Proprietor: KT & G Corporation, Daejeon 34337 (KR)
(72) Inventor: AHN, Ki Jin, Daejeon 34128 (KR); AHN, Byeong Yong, Daejeon 34128 (KR); SEO, Man Seok, Daejeon 34128 (KR); JUNG, Yong Mi, Daejeon 34128 (KR); MIN, Hye Jeong, Daejeon 34128 (KR); LEE, Hye Jeong, Daejeon 34128 (KR)
(74) Representative: Ter Meer Steinmeister & Partner
(86) International application number: PCT/KR2022/016684
(87) International publication number: WO 2023/080561

(56) References cited:
- WO-A2-2007/078197
- CN-A- 110 786 546
- KR-A- 20170 130 689
- KR-A- 20210 086 809
- US-A1- 2011 073 120
- US-A1- 2020 154 760
- US-B2- 10 390 559
- US-B2- 10 390 559

## Description

### Technical Field

The present disclosure relates to a sidestream smoke removing device including a HEPA filter. More specifically, the present disclosure relates to a sidestream smoke

### Background Art

Cigarette smoke produced by smoking may be classified as main stream smoke delivered to the mouth through a cigarette filter and sidestream smoke discharged into the air without passing through the filter.

A sidestream smoke removing device is a type of smoking accessory devised to, for example, reduce cigarette smell from hands, remove (or purify) sidestream smoke, and the like. The sidestream smoke removing device typically has defined therein an enclosed smoking space and a sidestream smoke removing means. A user may smoke by inserting a cigarette into the smoking space inside the sidestream smoke removing device.

In order to improve the functionality of the sidestream smoke removing device, a filter capable of effectively removing a large amount of sidestream smoke produced during smoking is necessary. In particular, the sidestream smoke removing device requires a filter having superior deodorizing performance for a large amount of sidestream smoke while not having a large size. In this regard, the inventor has completed the present invention by continuously researching such a filter. WO 2007/078197 A2 relates to a device for filtering tobacco smoke from a cigarette, in particular a filter cigarette, the device comprising a portable housing provided with a combustion space in which the cigarette can burn, a filter unit for filtering the tobacco smoke of a burning cigarette, at least one discharge opening for discharging filtered tobacco smoke and one or more tobacco smoke displacing units for displacing the tobacco smoke via the filter unit to the discharge opening, wherein a mouthpiece is formed on the housing, the mouthpiece comprising a holding unit for holding the cigarette, wherein the holding unit comprises an opening along which the cigarette can be pushed partially into the housing from outside the housing, and the opening is formed to hold the cigarette clampingly in the partially inserted situation.

### Citation List

### Patent Literature

Patent Literature 1: United States Patent Application Publication No. 2019/0307165

### DISCLOSURE

### Technical Problem

An objective of the present disclosure is to propose a sidestream smoke removing device including a filter capable of effectively removing sidestream smoke.

### Technical Solution

According to a first aspect of the present disclosure, provided is a sidestream smoke removing device including the features of claim 1.

As an embodiment of the present disclosure, the pleated HEPA filter may be applied to be compliant with a vertical internal cross-section of the sidestream smoke removing device at a position to which the pleated HEPA filter is applied.

As an embodiment of the present disclosure, the number of ridges defined by corrugations of the pleated HEPA filter may be equal to or greater than 5 and less than 30.

As an embodiment of the present disclosure, the height of each of ridges defined by corrugations of the pleated HEPA filter may be equal to or higher than 5 mm and lower than 25 mm.

As an embodiment of the present disclosure, the grade of the pleated HEPA filter may be from H11 to H13.

As an embodiment of the present disclosure, the pleated HEPA filter may be two or more overlapping pleated HEPA filters applied to the sidestream smoke processing part.

As an embodiment of the present disclosure, when the ventilation fan is operating in the sidestream smoke removing device, a flow rate of gas passing through the filter may range from 0.8 L/min to 3.0 L/min.

As an embodiment of the present disclosure, a vertical internal cross-sectional area of the sidestream smoke removing device may range from 100 mm² to 2,500 mm².

As an embodiment of the present disclosure, a vertical cross-section of the sidestream smoke removing device may be divided between the ventilation fan and the filter, and the exposed filter may be attached to and detached from the sidestream smoke removing device.

### Advantageous Effects

According to embodiments of the present disclosure, the sidestream smoke removing device using a pleated HEPA filter may obtain superior functionality in terms of the removal rate of sidestream smoke and durability while obtaining a suitable flow rate for smoking in the sidestream smoke removing device.

### Brief Description of Drawings

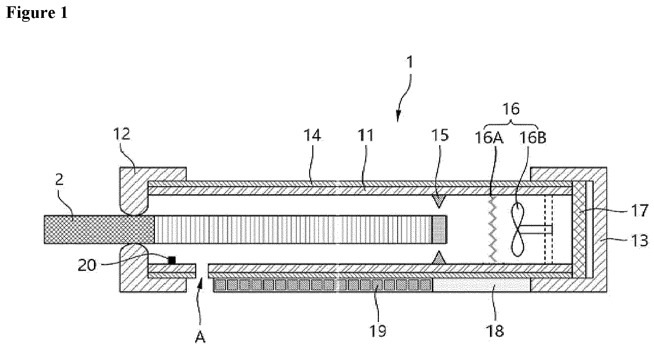

FIG. 1 is a schematic view illustrating a sidestream smoke removing device to which a smoking article is applied according to an embodiment of the present disclosure.

### Best Mode

Hereinafter, embodiments will be described in detail with reference to the illustrative drawings. It should be understood that the same reference numerals will be used to refer to the same or like components throughout the drawings. In the description of embodiments, detailed descriptions of components or functions will be omitted when it is determined that the description may render the subject matter in some embodiments of the present disclosure rather unclear.

In addition, terms, such as "first", "second", "A", "B", "(a)", and "(b)" may be used herein to describe components of the present disclosure. Each of these terms is not used to define the essence, order, sequence, or number of components, etc., but is used merely to distinguish the corresponding component from other components. When it is mentioned that a component "is connected, coupled, or joined to" another component, it should be interpreted that, not only can the component "be connected, coupled, or joined to" the other component, but the component and the other component can also "be connected, coupled, or joined to" to each other via a further component.

When a first component is included in a first embodiment and a second component having the same function as that of the first component is included in a second embodiment, the second component may be described using the same name as the first component. Unless stated to the contrary, a description of one embodiment may be applied to other embodiments, and a specific description of an overlapping range will be omitted.

Herein, the term "smoking article" may refer to any product that may be smoked or any product that may simulate smoking, irrespective of being based on tobacco, tobacco derivatives, expanded tobacco, reconstituted tobacco, or tobacco substitutes. For example, the smoking article may include a product that may be smoked, such as cigarette, cigar, or cigarillo.

Herein, the term "smoking material" may refer to a material that produces smoke and/or aerosols or is used in smoking. For example, the smoking material may include a tobacco material. The tobacco material may include, for example, tobacco leaf fragments, tobacco plant stems, or materials processed from at least one thereof. According to an embodiment of the present disclosure, the tobacco material may include ground tobacco leaves, ground reconstituted tobacco, expanded shredded tobacco, expanded tobacco midribs, reconstituted tobacco leaves, and the like, but is not limited thereto.

Herein, the term "upstream" or "upstream direction" may refer to a direction away from the oral region of a smoker, and the term "downstream" or "downstream direction" may refer to a direction toward the oral region of the smoker. The terms "upstream" and "downstream" may be used to describe relative positions of components of a smoking article. For example, in a smoking article 2 illustrated in FIG. 1, a filter part is disposed downstream or in a downstream direction of a smoking material part, and the smoking material part is disposed upstream or in an
upstream direction of the filter part.

Herein, the term "longitudinal direction" may refer to a direction matching the longitudinal axis of the smoking article or the sidestream smoke removing device, and the term "perpendicular direction" refers to a direction perpendicular to the longitudinal axis of the smoking article or the sidestream smoke removing device.

Herein, the term "puff" refers to inhalation of a user. The inhalation refers to an instance of inhaling air or smoke into the oral cavity, the nasal cavity, or the lungs of the user through the mouth or the nose of the user.

Hereinafter, a variety of embodiments of the present will be described in detail with reference to the accompanying drawings.

The present disclosure relates to a sidestream smoke removing device, and is intended to provide a sidestream smoke removing device including a filter capable of effectively trap sidestream smoke produced during smoking. Herein, FIG. 1 schematically illustrating an example sidestream smoke removing device is provided for a better understanding of the sidestream smoke removing device. According to an embodiment of the present disclosure, the sidestream smoke removing device 1 includes a housing 11, an article inserting part 12, and a sidestream smoke processing part 16. The sidestream smoke removing device 1 may further include a back cover 13, a heat insulating part 14, an ignition part 15, a mesh part 17, a control part 18, a display part 19, and a temperature sensor 20. In addition to these components, universal components commonly known to those skilled in the art to which the present disclosure pertains may be further included. For example, the sidestream smoke removing device 1 may further include a battery (not shown) to provide power to electrical components (e.g., the control part 18, the display part 19, etc.). In addition, some of the components illustrated in FIG. 1 may not be essential components of the sidestream smoke removing device 1. That is, the sidestream smoke removing device 1 may be configured such that some of the illustrated components are omitted. For example, the sidestream smoke removing device 1 may be configured such that some components, such as the temperature sensor 20 and the display part 19, are omitted. Hereinafter, respective components of the sidestream smoke removing device 1 will be described.

The housing 11 may define a smoking space within the sidestream smoke removing device 1, and define at least a portion of the exterior of the sidestream smoke removing device 1. Although the housing 11 is illustrated as designating a sidewall of the sidestream smoke removing device 1 in FIG. 1, the housing 11 may designate the entirety of an exterior-forming structure including the article inserting part 12, the back cover 13, and the heat insulating part 14. The housing 11 may be formed of a strong material in order to provide the durability of the sidestream smoke removing device 1 and reduce the possibility of damage of the sidestream smoke removing device 1.

According to an embodiment of the present disclosure, the housing 11 may have a vent hole A through which air may smoothly enter the smoking space. The vent hole A may promote combustion of the smoking article 2 by allowing air to enter during smoking, whereby smoking performance of the sidestream smoke removing device 1 may be significantly improved. Although FIG. 1 illustrates a single vent hole A formed in the housing 11 as an example, a plurality of vent holes A may be provided. In addition, the positions, sizes, distances, and the like of the vent holes A may be variously designed. Whether the vent hole A is opened or closed and/or the degree of opening/closing of the vent hole A may be controlled by the control part 18.

The article inserting part 12 may be located on one end (e.g., a downstream side) of the housing 11, and have an open area through which the smoking article 2 is to be inserted. A user may insert the smoking article 2 into the smoking space in the sidestream smoke removing device 1 through the article inserting part 12. In order to block heat from dissipating from inside the smoking space, the article inserting part 12 may be formed of a heat insulating material. In addition, in order to prevent the inserted smoking article 2 from shaking, the article inserting part 12 may have a holder structure capable of holding the smoking article 2.

According to an embodiment of the present disclosure, the article inserting part 12 may have a size-adjustable structure. For example, the article inserting part 12 may have a structure by which the open area may be tightened or loosely expanded by a manual operation. In another example, the article inserting part 12 may be configured to automatically tighten the open area to be compliant with the smoking article 2. In a more specific example, the article inserting part 12 is controlled by the control part 18. When the control part 18 detects the smoking article 2 being inserted using a sensor or a user input (e.g., performed by pushing a button) is received, the control part 18 may control the article inserting part 12 to reduce the open area. According to an embodiment of the present disclosure, as the size of the open area is adjusted to be compliant with the smoking article 2, shaking of the smoking article 2 may be prevented and support stability of the smoking article 2 may be improved. Furthermore, a variety of sizes of smoking articles 2 may be inserted into the sidestream smoke removing device 1, and thus the usability of the sidestream smoke removing device 1 may be improved.

The smoking article 2 may include a filter portion located upstream and a smoking material portion in contact with an upstream end of the filter portion. Here, the specific structure of the smoking article 2 may be variously changed. The filter portion may include a filter material capable of filtering smoke, and the smoking material portion may include a smoking material. An example of the smoking article 2 may be, but is not limited to, a combusting cigarette. The smoking article 2 may include any article that produces sidestream smoke during smoking.

The sidestream smoke processing part 16 is positioned at a distance from the upstream end of the smoking article 2 inserted into the smoking space, and may perform a variety of processing functions regarding sidestream smoke produced from the smoking article. For example, the sidestream smoke processing part 16 may be positioned between the inserted smoking article 2 and the back cover 13 to perform a purification function to the sidestream smoke. In addition, the sidestream smoke processing part 16 may perform a ventilation function to facilitate discharge of the purified sidestream smoke. Here, the specific structure and the operating system of the sidestream smoke processing part 16 may be variously designed, and may vary according to the embodiment.

According to an embodiment of the present disclosure, as illustrated in FIG. 1, the sidestream smoke processing part 16 includes a filter 16A and a ventilation fan 16B. The filter 16A may perform a sidestream smoke purification function by filtering sidestream smoke, whereas the ventilation fan 16B may perform a sidestream smoke discharge function. For example, the ventilation fan 16B may be rotated to draw sidestream smoke toward the filter 16A and allow sidestream smoke that has passed through the filter 16A to be properly discharged. The operation of the ventilation fan 16B may be controlled by the control part 18.

The filter 16A includes a pleated HEPA filter. Herein, the term "pleated HEPA filter" refers to a HEPA filter in which a sheet of HEPA filter is corrugated in a zigzag direction to form one or more ridges (i.e., portions protruding with respect to one surface). The term "HEPA filter" refers to a "high-efficiency particulate air filter" configured to remove particulates in the air, in which the term "particulates" refers to minute particles generally having an approximately 0.3 µm size. The material of the HEPA filter may be any material (e.g., polypropylene) commonly known to those skilled in the art to which the present disclosure pertains, and is not specifically limited.

According to an embodiment of the present disclosure, the pleated HEPA filter includes a base layer and a filter layer. The base layer and the filter layer are divided according to the durability of the material. The durability of the base layer is superior to that of the filter layer, whereas the filter layer has superior functionality as a filter than the base layer. The base layer is fabricated as nonwoven paper by a spunbond process, whereas the filter layer is fabricated as discontinuous fiber by a melt-blown process. One or both surfaces of the base layer are coated with the filter layer. According to an embodiment of the present disclosure, when the filter layer coats one surface of the base layer, the base layer is positioned to face the inserted smoking article. Since gas containing sidestream smoke produced by combustion of the smoking article has a high temperature rather than room temperature, positioning the base layer having superior durability opposite to the smoking article may be advantageous in terms of the durability and functionality of the entirety of the filter.

According to an embodiment of the present disclosure, the pleated HEPA filter is applied to be compliant with the vertical internal cross-section of the sidestream smoke removing device at a position to which the pleated HEPA filter is applied. This means that the pleated HEPA filter
has a size sufficient to be in contact with the internal surface of the sidestream smoke removing device. Thus, gas containing sidestream smoke produced by combustion of the smoking article is not allowed to move toward the ventilation fan without passing through the pleated HEPA filter.

According to an embodiment of the present disclosure, the vertical internal cross-sectional area of the sidestream smoke removing device is in the range of 100 mm² to 2,500 mm². The interior of the sidestream smoke removing device is based on the position to which the pleated HEPA filter is applied, and the pleated HEPA filter is applied according to the vertical internal cross-sectional area. The vertical internal cross-sectional area of the sidestream smoke removing device may have a variety of shapes, such as a circle or a polygon. A quadrangular shape of the interior of the sidestream smoke removing device may be advantageous in order for the HEPA filter pleated in parallel to be uniformly arranged in the vertical or horizontal direction. The shape and the size of the vertical cross-section of a portion of the interior of the sidestream smoke removing device to which the pleated HEPA filter is applied may be different from those of a portion of the interior of the sidestream smoke removing device to which the smoking article is applied. The shape and the size of the vertical cross-section of the portion of the interior of the sidestream smoke removing device to which the pleated HEPA filter is applied may be adjusted in consideration of the removal rate of sidestream smoke of the filter. Specifically, the vertical internal cross-sectional area of the sidestream smoke removing device may be equal to or greater than 100 mm², 200 mm², 300 mm², 400 mm², 500 mm², or 600 mm² while being equal to or less than 2,500 mm². The vertical internal cross-sectional area may also be equal to or greater than 100 mm² and equal to or less than 2,500 mm², equal to or greater than 300 mm² and equal to or less than 2,500 mm², equal to or greater than 500 mm² and equal to or less than 2,500 mm², or equal to or greater than 600 mm² and equal to or less than 2,500 mm². Below the above range, the filter may be excessively thick in order to realize the functionality of the filter. Above the above range, it is not desirable in terms of size reduction of the sidestream smoke removing device.

The pleated HEPA filter is configured such that a sheet of HEPA filter is corrugated in a zigzag direction to form one or more ridges (i.e., portions protruding with respect to one surface). The ridges may be formed in parallel at constant distances, with the number and height thereof being adjustable as required. According to an embodiment of the present disclosure, the number of ridges of the pleated HEPA filter formed by the corrugations is equal to or greater than 5 and less than 30. Specifically, the number of the ridges may be equal to or greater than 5, 6, 7, 8, 9, or 10 while being less than 30 or equal to or less than 28, 26, 24, 22, or 20. The number of the ridges may also be equal to or greater than 5 and less than 30, equal to or greater than 7 and equal to or less than 24, or equal to or greater than 10 and equal to or less than 20. Below the above range, sidestream smoke removal performance of the filter may be reduced. Above the above range, the flow rate of gas passing through the filter may be insufficient.

According to an embodiment of the present disclosure, the height of the ridges of the pleated HEPA filter formed by the corrugations is equal to or higher than 5 mm and lower than 25 mm. Specifically, the height of the ridges may be equal to or higher than 5 mm, 6 mm, 7 mm, 8 mm, 9 mm, 10 mm while being lower than 25 mm or being equal to or lower than 24 mm, 23 mm, 22 mm, 21 mm, or 20 mm. The height of the ridges may also be equal to or higher than 5 mm and lower than 25 mm, equal to or higher than 7 mm and equal to or lower than 22 mm, or equal to or higher than 10 mm equal to or lower than 20 mm. Below the above range, sidestream smoke removal performance of the filter may be reduced. Above the above range, the flow rate of gas passing through the filter may be insufficient.

According to an embodiment of the present disclosure, the grade of the pleated HEPA filter may be H11 to H13. The HEPA filter may be classified according to the ability thereof to filter 0.3 µm size particulates. For example, the grade of the HEPA filter may be classified by the European Standard EN 1822-1:2009 derived from ISO 29436 or the like. In an embodiment of the present disclosure, the HEPA filter may be preferably selected from filters ranging from H11 grade filters able to remove 95% of 0.3 µm particulates to H13 filters able to remove 99.97% of 0.3 µm particulates. Below this range, sidestream smoke removal performance of the filter may be reduced. Above this range, the flow rate of gas passing through the filter may be insufficient.

According to an embodiment of the present disclosure, when the sidestream smoke removal performance of a filter is insufficient, two or more overlapping pleated HEPA filters may be applied to the sidestream smoke processing part in order to offset the insufficient sidestream smoke removal performance of the filter. However, overlapping high-grade pleated HEPA filters is not preferable since the permeability of the overlapped filter structure may be significantly reduced.

In the sidestream smoke removal performance of the sidestream smoke removing device, the filter performs an important role. When the filter is used repeatedly, the functionality of the filter may be degraded. Thus, the filter may be designed to be replaceable or washable. According to an embodiment of the present disclosure, the sidestream smoke removing device may be designed such that the vertical cross-section is divided between the ventilation fan and the filter. Thus, the exposed filter may be attached to and detached from the portion of the sidestream smoke removing device. The separation and attachment/detachment may be enabled using a means commonly known in the art to which the present disclosure pertains. For example, the housing 11 may be provided with threads for the separation and attachment/detachment.

The ventilation fan 16B may serve to ventilate sidestream smoke. In this regard, the ventilation fan 16B may be rotated to draw sidestream smoke produced by combustion of the smoking article 2 toward the ventilation fan 16B. According to an embodiment of the present disclosure, the ventilation fan 16B draws surrounding gas at a flow rate of 2 L/min to 5 L/min, particularly, 2.5 L/min to 4.5 L/min, more particularly, 3 L/min to 4 L/min. However, when the ventilation fan 16B is applied to the sidestream smoke removing device, the gas should be delivered through a limited space such as the internal space of the sidestream smoke removing device and a flow path of the filter. Thus, it is difficult to generate flow or gas having the same flow rate using the ventilation fan 16B. According to an embodiment of the present disclosure, when the ventilation fan 16B operates in the sidestream smoke removing device 1, the flow rate of gas passing through the filter 16A is adjusted to be 0.8 L/min to 3.0 L/min, particularly, 0.9 L/min to 2.5 L/min, and more particularly, 1.0 L/min to 2.0 L/min. Below the above range, flow of gas within the sidestream smoke removing device 1 may not be desirable, thereby reducing the removal rate of sidestream smoke and having an adverse effect to combustion of the smoking article 2. Above the above range, sidestream smoke may remain in the filter for a significantly short time, and trapping functionality of the filter may be degraded.

The back cover 13 is positioned on the other end (e.g., the upstream end) of the housing 11, and may serve as a cover for the sidestream smoke removing device 1. The back cover 13 may have gas discharge passages through which the sidestream smoke processed (purified) through the sidestream smoke processing part 16 may be discharged. For example, the back cover 13 may be provided with gas discharge passages, such as fine holes.

The heat insulating part 14 may be formed of a low heat conductivity material to block heat from being discharged from inside the smoking space. Since the heat insulating part 14 is disposed on the outer surface of the housing 11, the heat insulating part 14 may prevent a risk of burn due to internal heat of the sidestream smoke removing device 1 when a body portion of the user is in contact with the sidestream smoke removing device 1 (e.g., when the user holds the sidestream smoke removing device 1 to smoke).

The temperature sensor 20 may be disposed within the smoking space to measure the temperature of the smoking article 30 inserted into the smoking space. The number, shape, disposed position, disposed distances, and the like of the temperature sensor 20 may be variously designed and may differ depending on the embodiment.

According to an embodiment of the present disclosure, as illustrated in FIG. 1, the temperature sensor 20 may be disposed to measure a temperature near the downstream end of the smoking material part. In this case, whether or not smoking is finished may be accurately determined only using the temperature sensor 20 without an additional monitoring module. This may be understood considering that smoking is generally finished when the smoking material is completely combusted. For example, when the temperature measured by the temperature sensor 20 is equal to or higher than a reference temperature (e.g., a smoking position has currently reached the downstream end of the smoking material) or when the temperature measured by the temperature sensor 20 is reduced to be equal to or lower than the reference temperature after having increased (e.g., combustion heat is reduced at the downstream end of the smoking material), the control part 18 may determine that smoking is finished.

According to an embodiment of the present disclosure, a plurality of temperature sensors 20 may be disposed in different positions within the smoking space. A plurality of temperature sensors 20 may be disposed in the longitudinal direction of the smoking article 30. Alternatively, the plurality of temperature sensor 20 may be disposed in positions opposite to each other. Here, the distances between the temperature sensors 20 may be the same or different. When the plurality of temperature sensors 20 are used, smoking progress (e.g., the degree of progress of smoking) may be more accurately monitored, and a variety of pieces of monitoring information to be described below may be obtained.

According to an embodiment of the present disclosure, starting of smoking may be detected (determined) by a temperature sensor disposed adjacent to the upstream end of the smoking material part. For example, the control part 18 may determine that smoking has started when the temperature measured by the temperature sensor is equal to or higher than the reference temperature. According to an embodiment of the present disclosure, the degree of progress of smoking (e.g., a position of current smoking (or combustion)) of the smoking article 2 may be determined by comparing temperatures measured by a plurality of temperature sensors disposed in the longitudinal direction of the smoking article.

According to an embodiment of the present disclosure, the plurality of temperature sensors 20 may be disposed in positions opposite to each other with respect to the inserted smoking article 2 or in the circumferential direction of the smoking article 2 within the smoking space (e.g., four temperature sensors 20 may be disposed at 90° intervals). In this case, the degree of tilting (shaking) of the smoking article 2 may be determined by comparing temperatures measured by the plurality of temperature sensors 20. For example, when the temperature measured by a specific temperature sensor is higher than the temperatures measured by the other temperature sensors, the control part 18 may determine that the inserted smoking article 2 is tilted in the direction of the specific temperature sensor. Alternatively, when temperatures measured by the plurality of temperature sensors 20 change to be equal to or higher than the reference temperature, the control part 18 may determine that the inserted smoking article 2 is shaking.

According to an embodiment of the present disclosure, the temperature sensor 20 having an elongated body may be disposed within the smoking space. For example, the elongated temperature sensor 20 may be disposed in the longitudinal direction of the smoking article 2. According to an embodiment of the present disclosure, the temperature sensor 20 may be configured such that a first portion of the elongated body measures the temperature of a first corresponding portion of the smoking material part of the smoking article 2 and a second portion of the elongated body measures the temperature of a second corresponding portion of the smoking material part of the smoking article 2. The temperature sensor may be specifically configured in any manner. In this case, the progress of smoking may be monitored on the basis of the temperature measured by the specific portion of the elongated body. For example, the control part 18 may determine the degree of progress of smoking of the smoking article 2 by measuring temperatures measured by respective portions of the elongated body.

According to an embodiment of the present disclosure, the temperature sensor(s) 20 may be disposed on the basis of a combination of the above-described embodiments.

The ignition part 15 may be disposed within the smoking space to ignite the smoking article 2 inserted into the smoking space. The ignition part 15 may be controlled by the control part 18 and may perform an ignition function in response to a manual operation of the user. The number, shape, disposed position, and the like of the ignition parts 15 may be variously designed and may differ depending on the embodiment.

According to an embodiment of the present disclosure, the ignition part 15 may be disposed in fixed positions. Specifically, as illustrated in FIG. 1 and the like, the ignition part 15 may be disposed to ignite the upstream end or a portion adjacent to the upstream end of the inserted smoking article 2. In this case, the structure of the sidestream smoke removing device 1 may be simplified, thereby minimizing the defect rate of manufacturing.

According to an embodiment of the present disclosure, the ignition part 15 may be designed and configured to be movable. The ignition part 15 may be specifically configured in any manner. For example, the ignition part 15 may be configured to move in the longitudinal direction by manual operation of the user or under the control of the control part 18. In an embodiment of the present disclosure, the control part 18 may move the ignition part 15 toward the upstream end of the smoking article 2 in response to the smoking article 2 being detected. In this case, the sidestream smoke removing device 1 may be universally applied to the smoking articles 2 having a variety of lengths, thereby significantly improving the usability of the sidestream smoke removing device 1.

The mesh part 17 may be disposed between the sidestream smoke processing part 16 and the back cover 13 to serve as a safety net. For example, the mesh part 17 may prevent a specific object (e.g., a fragment of the filter 16A) within the smoking space from moving toward the back cover 13.

The display part 19 may be on the outer surface of the housing 11 to display a variety pieces of information under the control of the control part 18. For example, the display part 19 may display information regarding the smoking progress, information regarding the device, smoking history information, information regarding the user, etc. Here, the information regarding the smoking progress may include information regarding the progress of smoking (e.g., all pieces of information regarding the progress of smoking, such as the degree of progress of smoking, the current position of smoking, the remaining number of puffs, a smoking time, a remaining smoking time, etc.) and puff information (e.g., all pieces of information regarding puff events, such as the number of puffs, the length of puff, the interval of puff, the strength of puff, whether or not the user is puffing, etc.), but is not limited thereto. The device may include information, such as power state, malfunction, a battery state (e.g., the state of charge of the battery, the necessity to charge, etc.), but is not limited thereto. The smoking history information may include the cumulative number of cigarettes smoked, etc., but is not limited thereto.

The display part 19 may visually display various types of information by including a visual display means, such as a light-emitting diode (LED) display. Here, a specific form of the display means may be variously modified.

The control part 18 may control the overall operation of the sidestream smoke removing device 1. For example, the control part 18 may control the operation of the ventilation fan 16B, the operation of the display part 19, or the operation of other components of the sidestream smoke removing device 1. In addition, the control part 18 may review the smoking progress of the smoking article 2. The control part 18 may determine whether or not the sidestream smoke removing device 1 is able to operate by reviewing the state of each of the components of the sidestream smoke removing device 1.

The control part 18 may be implemented as at least one processors. The processor may be implemented as an array of a plurality of logic gates, or a combination of a universal microprocessor and a memory in which a program executable by the microprocessor is stored. In addition, it will be apparent to those skilled in the art to which the present disclosure pertains that the control part 18 may be implemented as another type of hardware.

Although the control part 18 is illustrated as being positioned outside the housing 11 of the sidestream smoke removing device 1 in FIG. 1, this is only for the sake of brevity, and the control part 18 may be disposed in a variety of other positions. For example, the control part 18 may be disposed in a specific position within the housing 11.

In addition, in an embodiment of the present disclosure, the sidestream smoke removing device 1 may further include a module configured to provide audible and/or tactile outputs. For example, the sidestream smoke removing device 1 may further include a speaker, a vibration module, and the like. In this case, the control part 18 may provide various types of information to the user using the above-described module(s).

In addition, in an embodiment of the present disclosure, a cutting part may further be disposed within the smoking space. The cutting part may cut the smoking article 2 during combustion to prevent further combustion. In this manner, it is possible to provide a safe extinguishing function at a time point desired by the user and minimize a risk of burn that may occur due to the carelessness of the user (e.g., a risk of burn that may occur due to carelessness when the user extinguishes by him/herself) and a danger of fire. Here, the cutting part may be variously implemented and designed.

According to an embodiment of the present disclosure, the cutting part may be disposed in a fixed position and configured to cut a specific portion of the inserted smoking article 2. For example, the cutting part may be fixedly disposed at a position at which the filter 16A and the smoking material part are cut apart from each other. In this case, it is possible to guarantee a safe extinguishing function irrespective of the current smoking (combustion) position of the smoking article 2 and simplify the structure of the sidestream smoke removing device 1.

According to an embodiment of the present disclosure, the cutting part may be configured to be movable. For example, the cutting part may be configured to be moved by external force (e.g., a manual operation) of the user and configured to be moved under the control of the control part 18. As a more specific example, the cutting part may be automatically moved to a position adjacent to the current smoking (combustion) position of the smoking article 2 by the control part 18.

According to an embodiment of the present disclosure, the cutting part may be operated by the user by pressing a push button provided on the exterior of the housing 11, twisting the housing 11, stretching or compressing the housing 11 in the longitudinal direction, etc. The cutting part may have a structure mechanically working in concert with the housing 11 so as to perform the illustrated operations, or may be implemented such that the control part 18 operates the cutting part according to the illustrated operations.

According to an embodiment of the present disclosure, the sidestream smoke removing device 1 may include one or more support portions capable of supporting a side surface of the inserted smoking article 2 so that the smoking article 2 inserted into the sidestream smoke removing device 1 may be stably supported.

### Mode for Invention

Hereinafter, the configuration and effects associated therewith according to the present disclosure will be described in more detail. However, it should be understood that the Examples are provided to more specifically describe the present disclosure, and the scope of the present disclosure is by no means limited thereto.

### Examples

### Example 1

A sidestream smoke removing device (having a 50mm×50mm square internal cross-section) having the shape as illustrated in FIG. 1 was fabricated, and a smoking article (a product available from KT&G) was disposed inside the sidestream smoke removing device. When applied to be compliant with the internal cross-section of the sidestream smoke removing device, a pleated HEPA filter (H13 grade, structure: a filtration layer formed on a spunbond-based single surface using a melt-blown method, available from Clean & Science Corp.) having a thickness of about 2 mm was used as a filter positioned further upstream than the smoking article. As a ventilation fan positioned further upstream than the filter, a fan able to realize a flow rate of 3.5 L/min in an open space without a filter was used.

### Example 2

A sidestream smoke removing device the same as that of Example 1 was fabricated, except that a pleated HEPA filter having 10 ridges each having a height of 10 mm was used as a filter when applied to be compliant with the internal cross-section of the sidestream smoke removing device. A smoking article the same as that of Example 1 was disposed inside the sidestream smoke removing device.

### Example 3

A sidestream smoke removing device the same as that of Example 1 was fabricated, except that a pleated HEPA filter having 5 ridges each having a height of 10 mm was used as a filter when applied to be compliant with the internal cross-section of the sidestream smoke removing device. A smoking article the same as that of Example 1 was disposed inside the sidestream smoke removing device.

### Example 4

A sidestream smoke removing device the same as that of Example 1 was fabricated, except that a pleated HEPA filter having 20 ridges each having a height of 5 mm was used as a filter when applied to be compliant with the internal cross-section of the sidestream smoke removing device. A smoking article the same as that of Example 1 was disposed inside the sidestream smoke removing device.

### Example 5

A sidestream smoke removing device the same as that of Example 1 was fabricated, except that an H11 grade HEPA filter was used as a filter. A smoking article the same as that of Example 1 was disposed inside the sidestream smoke removing device.

### Example 6

A sidestream smoke removing device the same as that of Example 1 was fabricated, except that two overlapping H11 grade HEPA filters were used as a filter. A smoking article the same as that of Example 1 was disposed inside the sidestream smoke removing device.

### Example 7

A sidestream smoke removing device the same as that of Example 1 was fabricated, except that a HEPA filter having a filtration layer also formed on a spunbond-based opposite surface of the HEPA filter using a melt-blown method was used as a filter. A smoking article the same as that of Example 1 was disposed inside the sidestream smoke removing device.

### Comparative Example 1

A sidestream smoke removing device the same as that of Example 1 was fabricated, except that an unpleated HEPA filter was used as a filter when applied to be compliant with the internal cross-section of the sidestream smoke removing device. A smoking article the same as that of Example 1 was disposed inside the sidestream smoke removing device.

### Comparative Example 2

A sidestream smoke removing device the same as that of Example 1 was fabricated, except that a pleated HEPA filter having 30 ridges each having a height of 10 mm was used as a filter when applied to be compliant with the internal cross-section of the sidestream smoke removing device. A smoking article the same as that of Example 1 was disposed inside the sidestream smoke removing device.

### Comparative Example 3

A sidestream smoke removing device the same as that of Example 1 was fabricated, except that a pleated HEPA filter having 20 ridges each having a height of 25 mm was used as a filter when applied to be compliant with the internal cross-section of the sidestream smoke removing device. A smoking article the same as that of Example 1 was disposed inside the sidestream smoke removing device.

### Comparative Example 4

A sidestream smoke removing device the same as that of Example 1 was fabricated, except that two overlapping H13 grade HEPA filters were used as a filter. A smoking article the same as that of Example 1 was disposed inside the sidestream smoke removing device.

### Experimental Examples

### Experimental Example 1

Each of smoking articles inserted into the sidestream smoke removing devices according to Examples 1 to 7 and Comparative Examples 1 to 4 was ignited and was subjected to combustion for 10 minutes by driving the ventilation fan. A flow rate and a removal rate of sidestream smoke were evaluated on the basis of discharged gas, and the results are illustrated in Table 1 below. The removal rates of sidestream smoke are the results of contrast evaluation obtained from the respective sidestream smoke removing devices, on the basis of the device without a filter. The flow rates were measured using a Mass Flow Meter 4043H available from TSI, and the removal rates of sidestream smoke were measured using a Smoking Machine (SM) 405 SV available from Cerulean.

### Experimental Example 2

Smoking articles were inserted into the sidestream smoke removing devices according to Examples 1 to 7 and Comparative Examples 1 to 4, respectively, and were ignited. Smoking was performed using smoking equipment (RM20 available from Heinr Borgwaldt GmbH). The smoking equipment was designed to inhale 8 puffs for each of the smoking articles. When smoking of one smoking article was completed, the smoking article was replaced with another smoking article. When combustion was stopped before the smoking equipment inhaled 8 puffs, the number of smoking articles that had been smoked was counted. Numbers of continuously smoked smoking articles were evaluated and illustrated in Table 1 below.

**[Table 1]**

| Classification | Flow Rate ( L/min) | Sidestream Smoke Removal Rate (%) | Number of Continuously Smoked Smoking Articles |
|---|---|---|---|
| Example 1 | 1.3 | 88 | 20 |
| Example 2 | 1.8 | 80 | 20 |
| Example 3 | 2.5 | 74 | 40 |
| Example 4 | 3.0 | 70 | 10 |
| Example 5 | 2.5 | 80 | 30 |
| Example 6 | 1.8 | 94 | 40 |
| Example 7 | 2.2 | 94 | 40 |
| Comp. Example 1 | 0.3 | 75 | 3 |
| Comp. Example 2 | 0.6 | Not Measurable (Non-combustion) | 0 |
| Comp. Example 3 | 0.6 | Not Measurable (No Combustion) | 0 |
| Comp. Example 4 | 0.8 | Not Measurable (No Combustion) | 0 |

According to Table 1 above, using the pleated HEPA filter as a filter (Example 1) had superior results in terms of the removal rate of sidestream smoke and the continuity of smoking while obtaining a suitable flow rate for smoking, compared to the use of the unpleated HEPA filter (Comparative Example 1).

In adjustment of the number of ridges formed by pleating in the pleated HEPA filter, when the number of ridges was 5 (Example 3), when the number of ridges was 10 (Example 2), and when the number of ridges was 20 (Example 1), clearly improved effects in terms of the removal rate of sidestream smoke and the continuity of smoking were exhibited while a suitable flow rate for smoking was obtained. However, when the number of ridges was 30 (Comparative Example 2), a suitable flow rate was not obtained, and thus smoking was not easy.

In adjustment of the height of ridges formed by pleating in the pleated HEPA filter, when the height of ridges was 5 mm (Example 4) and when the height of ridges was 10 mm (Example 1), clearly improved effects in terms of the removal rate of sidestream smoke and the continuity of smoking were exhibited while a suitable flow rate for smoking was obtained. However, when the height of ridges was 25 mm (Comparative Example 3), a suitable flow rate was not obtained, and thus smoking was not easy.

When H11 grade (Example 5) was selected in place of H13 grade (Example 1) for the HEPA filter, a significant result was obtained. However, when two overlapping H11 grade HEPA filters were used (Comparative Example 4), a suitable flow rate was not obtained, and thus smoking was not easy. In contrast, in case of the H13 grade HEPA filter, when spunbond-based filter layers are formed on both sides (Example 7), significant improvements were obtained in terms of a flow rate, the removal rate of sidestream smoke, and the continuity of smoking.

### Description of Reference Numerals of Drawings

sidestream smoke removing device
2: smoking article
11: housing
12: article inserting part
13: back cover
14: heat insulating part
15: ignition part
16: sidestream smoke processing part
16A: filter
16B: ventilation fan
17: mesh part
18: control part
19: display part
20: temperature sensor
A: vent hole

## Claims

1. A sidestream smoke removing device (1) comprising:
a housing (11) having a smoking space defined therein;
an article inserting part (12) positioned on one end of the housing (11) and having an open area through which a smoking article (2) is inserted into the smoking space; and
a sidestream smoke processing part (16) positioned at a distance from an upstream end of the smoking article (2) inserted into the smoking space and configured to process sidestream smoke produced from the smoking article (2),
wherein the sidestream smoke processing part (16) comprises:
a filter (16A) comprising a pleated HEPA filter capable of filtering the sidestream smoke; and
a ventilation fan (16B) configured to allow the sidestream smoke to be discharged through the filter (16A),
wherein the pleated HEPA filter comprises a base layer and a filter layer, and
wherein one or both surfaces of the base layer are coated with the filter layer, and
when the one surface of the base layer is coated with the filter layer, the base layer is positioned to face the inserted smoking article (2).

2. The sidestream smoke removing device (1) according to claim 1, wherein the pleated HEPA filter is applied to be compliant with a vertical internal cross-section of the sidestream smoke removing device (1) at a position to which the pleated HEPA filter is applied.

3. The sidestream smoke removing device (1) according to claim 1, wherein the number of ridges defined by corrugations of the pleated HEPA filter is equal to or greater than 5 and less than 30.

4. The sidestream smoke removing device (1) according to claim 1, wherein the height of each of ridges defined by corrugations of the pleated HEPA filter is equal to or higher than 5 mm and lower than 25 mm.

5. The sidestream smoke removing device (1) according to claim 1, wherein the grade of the pleated HEPA filter is from H11 to H13.

6. The sidestream smoke removing device (1) according to claim 1, wherein the pleated HEPA filter comprises two or more overlapping pleated HEPA filters applied to the sidestream smoke processing part (16).

7. The sidestream smoke removing device (1) according to claim 1, wherein, when the ventilation fan (16B) is operating in the sidestream smoke removing device (1), a flow rate of gas passing through the filter ranges from 0.8 L/min to 3.0 L/min.

8. The sidestream smoke removing device (1) according to claim 2, wherein the sidestream smoke removing device (1) has a vertical internal cross-sectional area ranging from 100 mm² to 2,500 mm².

9. The sidestream smoke removing device (1) according to claim 1, wherein a vertical cross-section of the sidestream smoke removing device (1) is divided between the ventilation fan (16B) and the filter (16A), and the exposed filter is configured to be attachable to and detachable from the sidestream smoke removing device (1).

## Patentansprüche

1. Vorrichtung (1) zum Entfernen von Nebenstromrauch, die Folgendes umfasst:
ein Gehäuse (11), das einen darin definierten Rauchraum aufweist;
ein Artikeleinsetzteil (12), das an einem Ende des Gehäuses (11) positioniert ist und einen offenen Bereich, durch den ein Rauchartikel (2) in den Rauchraum eingesetzt wird, aufweist; und
ein Teil (16) zum Verarbeiten von Nebenstromrauch, das in einem Abstand von einem stromaufwärts liegenden Ende des Rauchartikels (2), der in den Rauchraum eingesetzt ist, positioniert ist und konfiguriert ist, Nebenstromrauch, der vom Rauchartikel (2) erzeugt wird, zu verarbeiten,
wobei das Teil (16) zum Verarbeiten von Nebenstromrauch Folgendes umfasst:
einen Filter (16A), der einen gefalteten HEPA-Filter umfasst, der den Nebenstromrauch filtern kann; und
ein Gebläse (16B), das so konfiguriert ist, dass der Nebenstromrauch durch den Filter (16A) abgeführt werden kann,
wobei der gefaltete HEPA-Filter eine Basislage und eine Filterlage umfasst,
wobei eine oder beide Oberflächen der Basislage mit der Filterlage beschichtet sind, und
wobei die eine Oberfläche der Basislage mit der Filterlage beschichtet ist, wobei die Basislage so positioniert ist, dass sie dem eingesetzten Rauchartikel (2) zugewandt ist.

2. Vorrichtung (1) zum Entfernen von Nebenstromrauch nach Anspruch 1, wobei der gefaltete HEPA-Filter so eingesetzt ist, dass er einem vertikal inneren Querschnitt der Vorrichtung (1) zum Entfernen von Nebenstromrauch an einer Position entspricht, an der der gefaltete HEPA-Filter eingesetzt ist.

3. Vorrichtung (1) zum Entfernen von Nebenstromrauch nach Anspruch 1, wobei die Anzahl der Rippen, die durch Riffelungen des gefalteten HEPA-Filters definiert sind, größer oder gleich 5 und kleiner als 30 ist.

4. Vorrichtung (1) zum Entfernen von Nebenstromrauch nach Anspruch 1, wobei die Höhe jeder der Rippen, die durch die Riffelungen des gefalteten HEPA-Filters definiert sind, größer oder gleich 5 mm und kleiner als 25 mm ist.

5. Vorrichtung (1) zum Entfernen von Nebenstromrauch nach Anspruch 1, wobei die Klasse des gefalteten HEPA-Filters im Bereich von H11 bis H13 liegt.

6. Vorrichtung (1) zum Entfernen von Nebenstromrauch nach Anspruch 1, wobei der gefaltete HEPA-Filter zwei oder mehr übereinanderliegende gefaltete HEPA-Filter umfasst, die bei dem Teil (16) zum Verarbeiten von Nebenstromrauch eingesetzt werden.

7. Vorrichtung (1) zum Entfernen von Nebenstromrauch nach Anspruch 1, wobei dann, wenn das Gebläse (16B) in der Vorrichtung (1) zum Entfernen von Nebenstromrauch betrieben wird, eine Durchflussmenge von Gas, das den Filter passiert, im Bereich von 0,8 l/min bis 3,0 l/min liegt.

8. Vorrichtung (1) zum Entfernen von Nebenstromrauch nach Anspruch 2, wobei die Vorrichtung (1) zum Entfernen von Nebenstromrauch eine vertikale innere Querschnittsfläche aufweist, die im Bereich von 100 mm² bis 2500 mm² liegt.

9. Vorrichtung (1) zum Entfernen von Nebenstromrauch nach Anspruch 1, wobei ein vertikaler Querschnitt der Vorrichtung (1) zum Entfernen von Nebenstromrauch zwischen dem Gebläse (16B) und dem Filter (16A) aufgeteilt wird und wobei der freiliegende Filter so konfiguriert ist, dass er an der Vorrichtung (1) zum Entfernen von Nebenstromrauch befestigt und von dieser gelöst werden kann.

## Revendications

1. Dispositif d'évacuation de fumée latérale (1) comportant :
un boîtier (11) ayant un espace à fumer défini dans celui-ci ;
une partie d'insertion d'article (12) positionnée sur une extrémité du boîtier (11) et ayant une zone ouverte à travers laquelle un article à fumer (2) est inséré dans l'espace à fumer ; et
une partie de traitement de fumée latérale (16) positionnée à une certaine distance d'une extrémité amont de l'article à fumer (2) inséré dans l'espace à fumer et configurée pour traiter de la fumée latérale produite à partir de l'article à fumer (2),
dans lequel la partie de traitement de fumée latérale (16) comporte :
un filtre (16A) comportant un filtre HEPA plissé capable de filtrer la fumée latérale ; et
un ventilateur de ventilation (16B) configuré pour permettre d'évacuer la fumée latérale à travers le filtre (16A),
dans lequel le filtre HEPA plissé comporte une couche de base et une couche de filtre, et
dans lequel une surface ou les deux surfaces de la couche de base sont revêtues de la couche de filtre, et
lorsque la surface de la couche de base est revêtue de la couche de filtre, la couche de base est positionnée de manière à faire face à l'article à fumer (2) inséré.

2. Dispositif d'évacuation de fumée latérale (1) selon la revendication 1, dans lequel le filtre HEPA plissé est appliqué pour être conforme à une section transversale interne verticale du dispositif d'évacuation de fumée latérale (1) à une position à laquelle le filtre HEPA plissé est appliqué.

3. Dispositif d'évacuation de fumée latérale (1) selon la revendication 1, dans lequel le nombre de nervures définies par des ondulations du filtre HEPA plissé est égal ou supérieur à 5 et inférieur à 30.

4. Dispositif d'évacuation de fumée latérale (1) selon la revendication 1, dans lequel la hauteur de chacune des nervures définies par des ondulations du filtre HEPA plissé est égale ou supérieure à 5 mm et inférieure à 25 mm.

5. Dispositif d'évacuation de fumée latérale (1) selon la revendication 1, dans lequel la qualité du filtre HEPA plissé est de H11 à H13.

6. Dispositif d'évacuation de fumée latérale (1) selon la revendication 1, dans lequel le filtre HEPA plissé comporte deux filtres HEPA plissés ou plus qui se chevauchent, appliqués à la partie de traitement de fumée latérale (16).

7. Dispositif d'évacuation de fumée latérale (1) selon la revendication 1, dans lequel, lorsque le ventilateur de ventilation (16B) fonctionne dans le dispositif d'évacuation de fumée latérale (1), un débit de gaz passant à travers le filtre varie de 0,8 l/min à 3,0 l/min.

8. Dispositif d'évacuation de fumée latérale (1) selon la revendication 2, dans lequel le dispositif d'évacuation de fumée latérale (1) a une aire de section transversale interne verticale variant de 100 mm² à 2 500 mm².

9. Dispositif d'évacuation de fumée latérale (1) selon la revendication 1, dans lequel une section transversale verticale du dispositif d'évacuation de fumée latérale (1) est divisée entre le ventilateur de ventilation (16B) et le filtre (16A), et le filtre exposé est configuré pour pouvoir être fixé au dispositif d'évacuation de fumée latérale (1) et être détaché de celui-ci.
